# EUROPEAN PATENT SPECIFICATION

(11) **EP 0 476 802 B1**
(45) Date of publication and mention of the grant of the patent: **21.06.1995**
(21) Application number: 91302950.0
(22) Date of filing: 04.04.1991
(51) Int. Cl.: F16H 55/18

(54) **Gear set**
Getriebe
Pair d'engrenages

(30) Priority: 20.09.1990 JP 251613/90
(43) Date of publication of application: 25.03.1992
(73) Proprietor: CHIBA DIES CO., LTD., Tokyo (JP)
(72) Inventor: Ueno, Kiyoshi, Ichikawa-shi, Chiba-ken (JP); Bushimata, Teisuke, Machida-shi, Tokyo (JP)
(74) Representative: Ben-Nathan, Laurence Albert

(56) References cited:
- WO-A-89/10504
- DE-A- 3 803 700
- US-A- 4 679 459

## Description

This invention relates to a gear set comprising a pair of gears having double tooth rows deviating in tooth pitch from each other in the pitch circle direction.

Gears engaged with each other by and large bring about vibrations and noises when rotating to transmit a rotary motion. The vibrations and noises produced during the rotation of the engaged gears are due to a backlash (gap between meshed teeth) which is intentionally defined between the meshed teeth of the engaged gears in order to smoothly rotate the gear to transmit the rotary motion and deviation in circular pitch attributable to an error in measurement in manufacturing the gear. Thus, the aforementioned backlash (clearance) is necessary for making up for the deviation in circular pitch. Therefore, the conventional gear cannot essentially be free from such disadvantages.

Furthermore, the gears inevitably turn out to be worn out during service to make the backlash larger. As a result, the vibrations and noises produced in rotating the engaged gears become conspicuous. Though a gear system with a structure capable of positively lessening the backlash might be able to be accomplished, it would be complicated in structure and difficult of manufacture.

Helical gears can decrease vibrations and noises produced during rotation and transmit a rotary motion smoothly, but entail problems such as difficulty encountered in the manufacture thereof and production of undesirable thrust stress. Though double helical gears produce little thrust stress, the difficulty in the manufacture of the helical gear remains the same. Beyond these drawbacks suffered by the gears of this type, vibrations and noises produced inherently in rotating the engaged gears could not be prevented.

On the other hand, a spur gear having a row of teeth extending in parallel to the axis thereof per se does not withstand the thrust load exerted on the gear teeth in the axial direction.

Under the circumstances noted above, a need has been felt for a high-performance spur gear capable of efficiently transmitting a rotary motion without bringing about vibrations and noises and being applicable to precision instruments and machines.

US-A-2,862,400 illustrates a gear having two sets of axially spaced teeth separated by a continuous reinforcing web.

In view of the drawbacks of the conventional spur gear as noted above, it is an object of the present invention to provide a gear capable of coming into close engagement with a counterpart gear without a backlash between the engaged gears to permit smooth transmission of a rotary motion with high efficiency and without involving vibrations and noises.

Another object of the present invention is to provide a gear having a self-aligning function capable of maintaining the degree of parallelization between the axial shafts supporting the gear and a counterpart gear which are in engagement with each other, to thereby transmit the rotary motion with high efficiency, and a function of sufficiently withstanding a thrust load exerted thereon in the axial direction.

A further object of the present invention is to provide a gear having excellent performance, which can be manufactured and miniaturized with ease.

To attain the aforementioned objects according to the present invention there is provided a pair of gears in accordance with Claim 1.

As one example, the circularly arranged teeth in one of the rows may be deviated by one-half the circular pitch relative to those in the other row. Thus, two adjacent teeth in the adjoined rows which are integrally connected are deviated circumferentially to each other so as to form lateral side steps. When the adjacent teeth deviated in pitch are meshed into between two sets of opposite teeth of the counterpart gear, they bring about a wedging effect in conjunction with the teeth of the counterpart gear and are urged in the opposite directions to each other. Consequently, the teeth of the gear come into close engagement with those of the counterpart gear so as not to form a backlash between the teeth of the opposed gears. As a result, the engaged gears permit smooth transmission of a rotary motion with high efficiency and without involving vibrations and noises.

The effect of the lateral side steps formed on the adjacent teeth with the pitch deviation, consists in preventing the engaged gears from moving in the lateral direction.

The present invention will become more fully understood from the detailed description given hereinbelow and the accompanying drawings which are given by way of illustration only, and thus are not limitative of the present invention, and wherein: Figure 1 is a perspective view of engaged gears each having double rows of teeth according to one embodiment of the present invention; Figures 2(A) and 2(B) are a side view and a front view, in partly in axial section, of the gear according to this invention; Figure 3 is a partial sectioned, enlarged perspective view of the same; and Figure 4 is an explanatory view of the meshed teeth of the gears according to this invention.

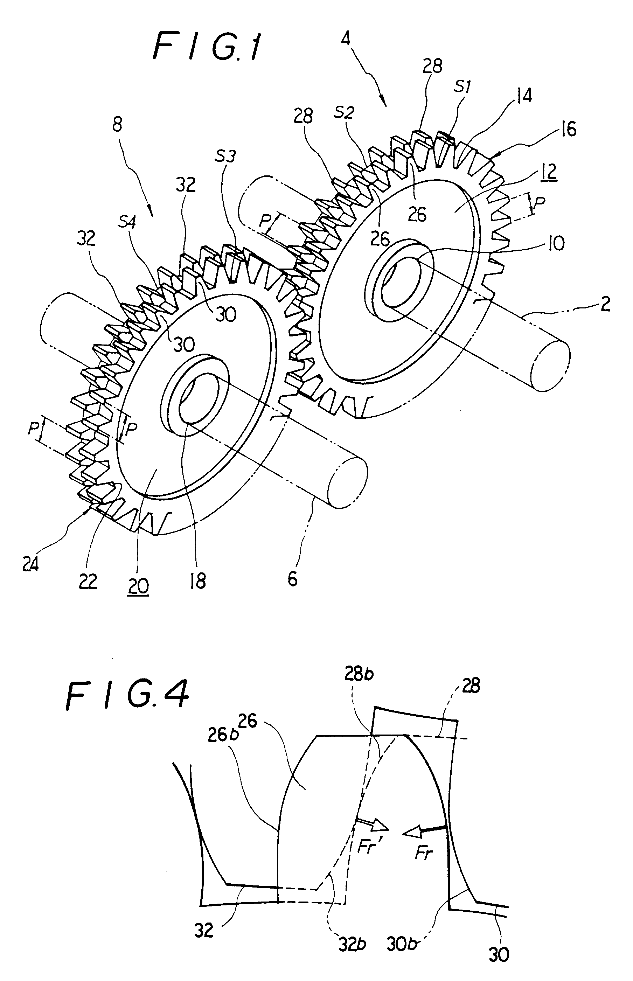

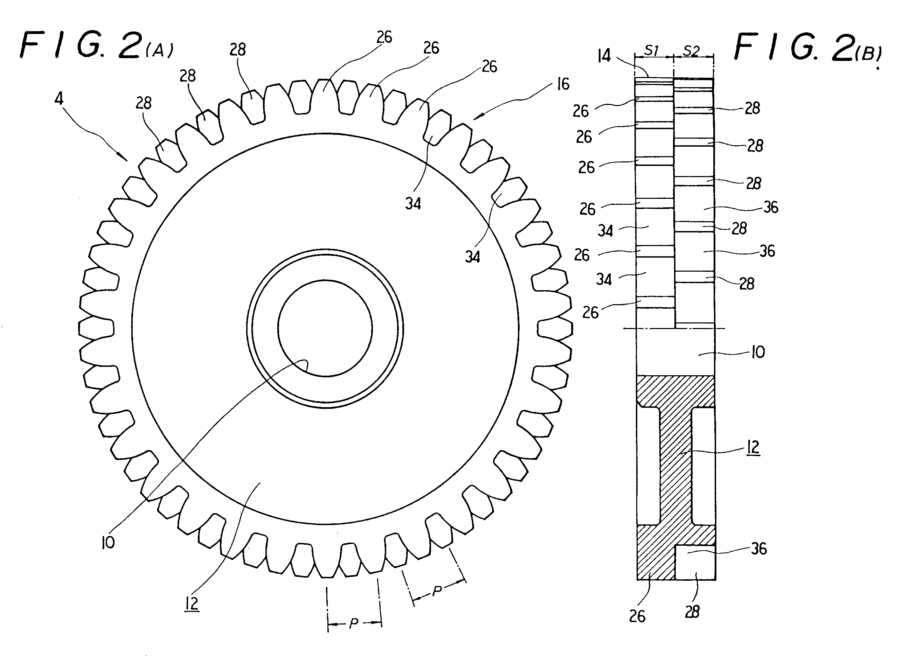

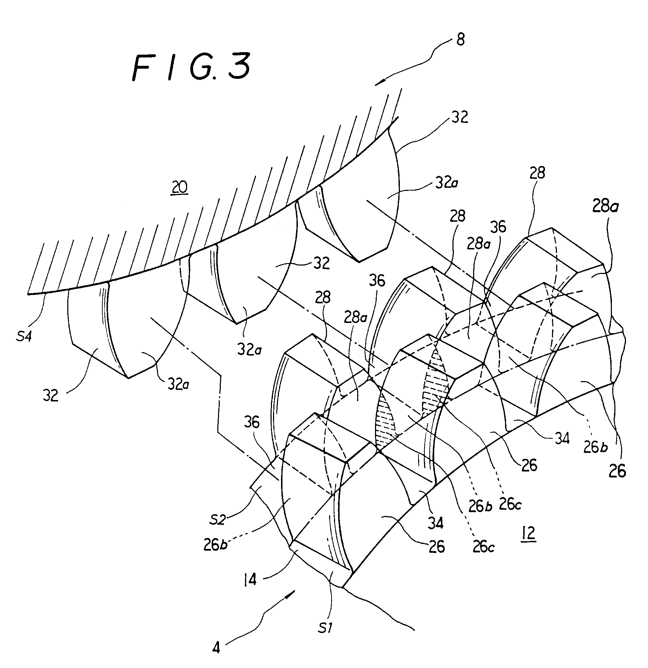

A gear set comprising gears with double rows of teeth according to this invention, which constitutes a motion-transmitting system in conjunction with another counterpart gear, will be described with reference to Figure 1 through Figure 3. That is, a pair of gears 4, 8 are engaged with each other as illustrated in Figure 1.

As one example, the gear 4 is supported by a driving shaft 2 connected to a machine or instrument (not shown), and the gear 8 engaged with the gear 4 is supported by a follower shaft 6, so that a rotary motion is transmitted from the driving shaft 2 to the follower shaft 6.

The gear 4 comprises a circular gear base 12 having a center hole 10 into which the shaft 2 is fitted, and two rows of teeth 16 which are formed on the circumferential portion 14 of the base 12. The teeth 16 in the respective rows S1, S2 are arranged at a regular pitch P in the circumferential direction and each extend laterally in parallel to the shaft 2 so as to assume a common spur toothed wheel at a glance. Also, the gear 8 comprises a circular gear base 20 having a center hole 18 into which the shaft 6 is fitted, and two rows of teeth 24 which are formed on the circumferential portion 22 of the base 20, and arranged at a regular pitch P in the respective rows S3, S4 in the circumferential direction.

The teeth 16 are composed of tooth elements 26, 28 in each row, each having involute tooth surfaces. The tooth elements 26 are circumferentially lined in the row S1 on the circumferential portion 14 of the base 12 with deviation of one-half the circular pitch of the teeth from the tooth elements 28 in the row S2. The tooth elements 26, 28 have the same pitch circle.

The teeth 24 of the gear 8 are composed of tooth elements 30, 32 in each row, each having involute tooth surfaces. The tooth elements 30 and 32 are arranged with deviation of one-half pitch in the circumferential direction, and have the same pitch circle.

In the illustrated embodiment, though the gears 4, 8 are designed so that the tooth elements 26, 28, 30 and 32 have the same module and the gear bases 12, 20 have the same diameter, the bases 12, 20 may be made different in diameter, respectively. The rows S1, S2 (S3, S4) are equal in width to each other.

The gears 4, 8 are formed of plastics materials such as polyacetal by molding.

The principle of increasing the contact strength of the gear according to this invention will be explained below. For instance, when the gears 4, 8 are mutually engaged, a contact interval is defined between the tooth element 26 in the row S1 of the gear 4 and the tooth element 30 in the row S3 of the counterpart gear 8, and simultaneously, another contact interval is defined between the tooth element 28 in the row S2 of the gear 4 and the tooth element 32 in the row S4 of the gear 8. Since the different contact intervals are concurrently brought about, the contact strength of the engaged gears is increased. As a result, the durability of the gear system can be improved.

Furthermore, the lateral side steps 28a, 26b of the tooth elements 26, 28 of the gear 4 serves as a blocking member for preventing the tooth elements 30, 32 of the counterpart gear 8 which are meshed with the tooth elements 26, 28 from moving in the thrust direction. Also, the lateral side steps of the tooth elements 30, 32 of the gear 8 serves as a blocking member against the tooth elements 26, 28 of the gear 4. Therefore, it is unnecessary to use retaining means for preventing the engaged gears from moving laterally.

Thus, the gears according to this invention can be stably and closely engaged. The close engagement of the gears 4, 8 can be warranted to permit reliable and efficient transmission of a rotary motion. Besides, since the gears come in close engagement with each other, little vibrations and noises are produced when rotating. Therefore, the gear system according to this invention can desirably be applied to, particularly, printing machines having a function of feeding a sheet precisely.

The effect of bringing the gears according to this invention into close engagement with each other will be understood from the following explanation made with reference to Figure 4.

Since the teeth 26, 28 in the rows S1, S2 are deviated circumferentially by one-half pitch, the tooth surface 26b of the tooth 26 in the row S1 are diagonally opposite to the tooth surface 28b of the adjacent tooth 28 in the row S2. Therefore, when the gears 4, 8 are mutually engaged, the tooth 26 in the row S1 of the gear 4 enters into between the opposed teeth 30 in the row S3 of the counterpart gear 8 like a wedge, and simultaneously, the tooth 28 in the row S2 of the gear 4 enters into between the opposed teeth 32 in the row S4 of the gear 8. At this time, the tooth surface 26b of tooth 26 of the gear 4 comes into contact with the tooth surface 30b of the tooth 30 of the gear 8, and the tooth surface 28b of the tooth 28 of the gear 4 comes in contact with the tooth surface 32b of the tooth 32 of the gear 8. Since the tooth surfaces 30b, 32b are diagonally opposite to each other, the tooth surfaces 26b 28b are subjected to reactive forces (Fr, Fr′) from the tooth surface 30b, 32b. The reactive forces are effected on the meshed teeth of the engaged gears. Accordingly, there is no backlash between the meshed teeth of the gears of this invention, so that the engaged gears can be rotated to effectively transmit the rotary motion without involving wobbling, vibrations and noises.

Though, in the aforenoted embodiment, the adjacent teeth in the rows are circumferentially deviated by one-half pitch, this should not however be understood as limitative. The pitch deviation with which the adjacent teeth are lined may be arbitrarily determined.

As is apparent from the foregoing, according to the present invention, since the two rows of teeth deviated in the direction of the pitch circle are formed around the gear base, the gears can be mutually engaged without a backlash between the meshed teeth to enable transmission of a rotary motion to be carried out with high efficiency and without vibrations and noises. Furthermore, since the gear with involving the double rows of teeth has the lateral steps on the side surfaces of the teeth, the engaged gears can sufficiently withstand a thrust load exerted thereon to thereby maintain the degree of parallelization between the axial shafts supporting the engaged gears and transmit the rotary motion smoothly and efficiently. The gear of the present invention is simple in structure so that it can be manufactured and miniaturized with ease.

## Claims

1. A pair of gears (4,8) meshing intimately with each other, each gear being of plastics material and comprising a circular gear base (12,20) having an outer circumferential surface portion (14,22) and double rows of teeth (S1, S2; S3, S4) which each extend laterally in parallel to the axial direction of said gear base on said circumferential surface portion, said teeth being fixedly positioned so that two adjacent teeth in the adjoined rows are integrally connected with each other in the axial direction, and said teeth being equal in pitch circle and width and being circumferentially deviated in pitch from the respective adjacent teeth in the contiguous tooth row.

2. A pair of gears according to Claim 1 wherein said teeth (16,24) in one of said rows (S1, S2; S3, S4) are deviated circumferentially by one-half pitch relative to those in the contiguous rows.

3. A pair of gears according to Claim 1 or Claim 2 wherein said teeth (16,24) in the both rows (S1, S2; S3, S4) are equal in width.

4. A pair of gears according to any one of Claims 1 - 3 wherein each gear has a center hole (10,18) for permitting an axial shaft (2,6) to be fitted thereinto, said teeth each having involute tooth surfaces.

## Patentansprüche

1. Paar eng miteinander eingreifender Zahnräder (4, 8), wobei jedes Zahnrad aus Kunststoff ist und eine kreisförmige Zahnradbasis (12, 20) aufweist, die einen äußeren umfangförmigen Oberflächenteil (14, 22) und doppelte Zahnreihen (S1, S2; S3, S4) hat, von denen sich jede seitlich parallel zur Achsenrichtung der Zahnradbasis auf dem umfangförmigen Oberflächenteil erstreckt, wobei die Zähne fest positioniert sind, so daß zwei benachbarte Zähne in den angrenzenden Reihen ganz miteinander in der Achsenrichtung verbunden sind, und wobei die Zähne gleich in Teilkreis und Breite sind und im Umfang in der Teilung von den diesbezüglichen benachbarten Zähnen in der angrenzenden Zahnreihe abweichen.

2. Zahnradpaar nach Anspruch 1, bei dem die Zähne (16, 24) in einer der Reihen (S1, S2; S3, S4) im Umfang um eine halbe Teilung bezüglich derjenigen in der angrenzenden Zahnreihe abweichen.

3. Zahnradpaar nach einem der Ansprüche 1 oder 2, bei dem die Zähne (16, 24) in den beiden Reihen (S1, S2; S3, S4) gleich in der Breite sind.

4. Zahnradpaar nach einem der Ansprüche 1 bis 3, bei dem jedes Zahnrad ein Loch im Mittelpunkt (10, 18) hat, um es einer axialen Welle zu erlauben, darin eingepaßt Zu sein, wobei die Zähne jeweils Evolventenzahnoberflächen haben.

## Revendications

1. Paire de roues dentées (4, 8) s'engrenant intimement l'une avec l'autre, chaque roue dentée étant en matière plastique et comprenant une base (12, 20) circulaire de roue ayant une partie (14, 22) superficielle extérieure circulaire et deux rangées de dents (S1, S2; S3, S4) qui s'étendent chacune latéralement en parallèle avec la direction axiale de ladite base de la roue sur ladite partie superficielle circulaire, lesdites dents étant positionnées de manière fixe de sorte que les dents adjacentes dans les rangées attenantes sont intégralement connectées les unes avec les autres dans la direction axiale et lesdites dents étant de largeur et de pas circulaire égaux et décalées circulairement en pas par rapport aux dents adjacentes respectives de la rangée contigüe de dents.

2. Paire de roues dentées selon la revendication 1 dans laquelle lesdites dents (16, 24) de l'une desdites rangées (S1, S2; S3, S4) sont décalées circulairement d'un demi-pas par rapport aux dents des rangées contigües.

3. Paire de roues dentées selon la revendication 1 ou la revendication 2 dans laquelle lesdites dents (16, 24) des deux rangées (S1, S2; S3, S4) sont de largeur égale.

4. Paire de roues dentées selon l'une quelconque des revendications 1-3 dans laquelle chaque roue dentée a un trou central (10, 18) pour permettre l'introduction d'un arbre (2, 6) axial, lesdites dents ayant chacune des surfaces à développante de cercle.
